(19) Europäisches Patentamt
European Patent Office
Office européen des brevets

(11) EP 1 800 748 B1

(12) # FASCICULE DE BREVET EUROPEEN

(45) Date de publication et mention de la délivrance du brevet:
**27.04.2016 Bulletin 2016/17**

(21) Numéro de dépôt: **06291959.2**

(22) Date de dépôt: **15.12.2006**

(51) Int Cl.:
***B01J 37/20*** (2006.01) ***B01J 35/00*** (2006.01)
***B01J 23/00*** (2006.01) ***C10G 45/32*** (2006.01)
***C10G 49/04*** (2006.01) ***B01J 23/85*** (2006.01)
***B01J 23/883*** (2006.01) ***B01J 35/10*** (2006.01)
***C10G 45/38*** (2006.01)

(54) **PROCÉDÉ D'HYDROGÉNATION SÉLECTIVE METTANT EN OEUVRE UN CATALYSEUR SULFURÉ**

SELEKTIVES HYDRIERUNGSVERFAHREN MIT VORSULFIDIERTEM KATALYSATOR

METHOD OF SELECTIVE HYDROGENATION USING A SULPHIDED CATALYST

(84) Etats contractants désignés:
**DE FR GB IT NL**

(30) Priorité: **22.12.2005 FR 0513174**

(43) Date de publication de la demande:
**27.06.2007 Bulletin 2007/26**

(73) Titulaire: **Institut Français du Pétrole**
**92852 Rueil Malmaison Cedex (FR)**

(72) Inventeurs:
- **Bouchy, Christophe**
  **69007 Lyon (FR)**
- **Picard, Florent**
  **69360 Communay (FR)**
- **Marchal, Nathalie**
  **69230 Saint Genis Laval (FR)**

(56) Documents cités:
**EP-A- 1 447 436** **BE-A- 676 321**
**GB-A- 1 379 202** **GB-A- 1 415 417**

- **SUN M ET AL: "Theoretical investigations of the structures and properties of molybdenum-based sulfide catalysts", APPLIED CATALYSIS A: GENERAL, ELSEVIER SCIENCE, AMSTERDAM, NL, vol. 263, no. 2, 10 juin 2004 (2004-06-10) , pages 131-143, XP004506881, ISSN: 0926-860X**
- **TOBA M ET AL: "Selective hydrodesulfurization of FCC gasoline over CoMo/Al2O3 sulfide catalyst", CATALYSIS TODAY, ELSEVIER, vol. 104, no. 1, 15 juin 2005 (2005-06-15) , pages 64-69, XP004922067, ISSN: 0920-5861**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 800 748 B1

## Description

### DOMAINE DE L'INVENTION

La production d'essences répondant aux nouvelles normes d'environnement nécessite que l'on diminue de façon importante leur teneur en soufre à des valeurs n'excédant généralement pas 50 ppm, et préférentiellement inférieures à 10 ppm.
Il est par ailleurs connu que les essences de conversion, et plus particulièrement celles provenant du craquage catalytique, qui peuvent représenter 30 à 50 % du pool essence, présentent des teneurs en mono-oléfines et en soufre élevées. Le soufre présent dans les essences est pour cette raison imputable, à près de 90 %, aux essences issues des procédés de craquage catalytique, qu'on appellera dans la suite essence de FCC (Fluid Catalytic Cracking selon la terminologie anglosaxonne, que l'on peut traduire par craquage catalytique en lit fluidisé). Les essences de FCC constituent donc la charge préférée du procédé de la présente invention.
Plus généralement, le procédé selon l'invention est applicable à toute coupe essence contenant une certaine proportion de dioléfines, et pouvant contenir en outre quelques composés plus légers appartenant aux coupes C3 et C4.

Les essences issues d'unités de craquage sont généralement riches en mono-oléfines et en soufre, mais également en dioléfines dont la teneur, pour les essences issues de craquage catalytique peut varier de 1% poids à 5 % poids. Les dioléfines sont des composés instables qui peuvent polymériser facilement et doivent généralement être éliminées avant tout traitement de ces essences tels que les traitements d'hydrodésulfuration destinés à répondre aux spécifications sur les teneurs en soufre dans les essences. Toutefois, cette hydrogénation doit s'appliquer sélectivement aux dioléfines afin de limiter l'hydrogénation des mono-oléfines et de limiter la consommation d'hydrogène ainsi que la perte d'octane de l'essence. Par ailleurs, comme cela a été décrit dans la demande de brevet EP01077247 A1, il est avantageux de transformer par alourdissement les composés soufrés légers saturés, qui sont les composés soufrés dont le point d'ébullition est inférieur au point d'ébullition du thiophène, tels que le méthanethiol, l'éthanethiol, le diméthylsulfure avant l'étape de désulfuration car cela permet de produire une fraction essence désulfurée composée majoritairement de mono-oléfines à 5 atomes de carbone sans perte d'octane par simple distillation. La quantité de soufre présente dans la charge après l'hydrogénation sélective et l'alourdissement des composés soufrés légers n'est pas modifiée, seule la nature du soufre l'est par alourdissement des composés soufrés légers. EP1 447 436 divulgue un procédé d'hydrotraitement de coupes contenant des composés soufrés et des oléfines. De plus, les composés diéniques présents dans la charge à traiter sont instables et ont tendance à former des gommes par polymérisation. Cette formation de gommes entraîne une désactivation progressive du catalyseur d'hydrogénation sélective ou un bouchage progressif du réacteur. Pour une application industrielle, il est donc important d'utiliser des catalyseurs qui limitent la formation de polymères, c'est à dire des catalyseurs présentant une faible acidité ou bien dont la porosité est optimisée pour faciliter l'extraction continue des polymères ou précurseurs de gommes par les hydrocarbures de la charge, afin d'assurer une durée de cycle maximale pour le catalyseur.

La présente invention concerne l'utilisation d'un nouveau catalyseur dans un procédé permettant de réaliser conjointement l'hydrogénation des composés polyinsaturés et plus particulièrement des dioléfines, ainsi que l'alourdissement des composés soufrés légers et plus particulièrement des mercaptans.
Un des avantages de l'invention est de faciliter l'élimination du soufre par alourdissement des mercaptans de manière à pouvoir les séparer plus facilement et donc les éliminer dans une étape ultérieure d'hydrodésulfuration.

Un autre avantage de l'invention est d'obtenir une essence présentant un indice d'octane élevé.
Un troisième avantage de l'invention réside dans le fait que la formulation du catalyseur est ajustée afin d'assurer une meilleure stabilité du catalyseur vis à vis de la formation de polymères, une bonne sélectivité vis à vis de l'hydrogénation des dioléfines et une bonne activité pour la conversion des mercaptans et autres composés soufrés légers.

### ETAT DE LA TECHNIQUE

La littérature décrit des formulations catalytiques ou des procédés permettant, soit d'hydrogéner sélectivement les dioléfines en mono-oléfines, soit de transformer les mercaptans par alourdissement, soit de réaliser ces deux types de réactions, en une ou deux étapes.

Il est connu d'utiliser des catalyseurs contenant au moins un métal noble. Ainsi, de nombreux brevets proposent des catalyseurs pour l'hydrogénation sélective contenant du palladium. En effet, le palladium est connu pour son activité hydrogénante et est largement utilisé dans les procédés d'hydrogénation sélective. Toutefois, le palladium est sensible aux poisons et notamment à la présence de soufre. La présente invention se différentie notamment de ces catalyseurs par le fait que le catalyseur selon l'invention ne contient pas de palladium, et plus largement, ne contient pas de métaux nobles.
La demande de brevet européen EP 0685552 A1 propose un procédé d'hydrogénation des dioléfines et de réduction

de la teneur en mercaptans contenus dans une essence de craquage catalytique basé sur un catalyseur contenant entre 0,1 et 1% poids de palladium.

La demande de brevet européen EP 0623387 A1 propose un catalyseur comprenant au moins un métal du groupe VIII choisi de manière préférée parmi le platine, le palladium et le nickel et au moins un métal additionnel M choisi de manière préférée dans le groupe formé par le germanium, l'étain, le plomb, le titane, le fer, le molybdène, le tungstène et le rhénium. Le catalyseur est caractérisé par le fait que le métal du groupe VIII est activé par réduction dans le réacteur avant introduction du métal M. Le catalyseur de la présente invention se différentie de ce brevet car il ne subit pas d'étape de réduction lors de la phase de préparation.

Les brevets et demandes de brevets suivants proposent des solutions pour hydrogéner sélectivement les dioléfines, les réactions affectant éventuellement les composés soufrés si ils sont présents ne sont pas mentionnés.

Le brevet US 6469223 concerne un procédé d'hydrogénation sélective de dioléfines sur un catalyseur contenant du nickel et du molybdène sur un support à base d'alumine. Le procédé est caractérisé par le fait que les métaux nickel et molybdène sont mis en oeuvre sous forme d'oxydes. La présente invention se différentie de cet art antérieur en ce que les métaux sont mis en oeuvre sous forme de sulfures métalliques et non d'oxydes.

Le brevet US 3472763 propose un procédé d'hydrogénation sélective comprenant un catalyseur à base de nickel supporté sur alumine. Le catalyseur peut également contenir de manière préférée entre 1% et 10% de molybdène. Ce catalyseur est par ailleurs caractérisé par une répartition poreuse telle que le volume poreux total est supérieur à 0,4 $cm^3/g$, avec 40% à 80% de ce volume correspondant à des pores dont le diamètre est supérieur à 0,05 et dont les pores qui ont un diamètre compris entre 0,05 et 1 micron représente plus de 20% du volume poreux. Ce brevet enseigne par ailleurs qu'il est préférable de réduire les métaux avant leur sulfuration partielle. Le catalyseur de la présente invention se différentie de cet art antérieur notamment par la teneur en molybdène qui est supérieure à 10% poids, et par l'étape de sulfuration qui est réalisée sur les métaux à l'état d'oxydes.

Les brevets et demandes de brevets suivants proposent des solutions pour alourdir les mercaptans par des réactions de thioéthérification et éventuellement hydrogéner sélectivement les dioléfines.

Le brevet US 5807477 propose un procédé permettant, dans une première étape, de transformer les mercaptans en sulfures par addition sur les dioléfines, sur un catalyseur comprenant un métal du groupe VIII de préférence du nickel sous forme d'oxyde, puis dans une seconde étape, d'hydrogéner sélectivement les dioléfines dans une colonne de distillation réactive en présence d'hydrogène. La présente invention se différentie de ce brevet car les étapes d'hydrogénation sélective et d'alourdissement des composés soufrés sont réalisées conjointement sur le même catalyseur, mis en oeuvre sous forme sulfurée.

Le brevet US 5851383 décrit un procédé d'hydrogénation sélective et de thioéthérification de coupes C3-C5 caractérisé par un dispositif de distillation comprenant deux zones de fractionnement permettant de récupérer séparément les composés légers et les thioéthers. Les catalyseurs décrits sont soit des catalyseurs à base de métal du groupe VIII, soit des résines contenant un métal. Un catalyseur contenant entre 15% et 35% de nickel est préféré. Le catalyseur de la présente invention se différentie de ce brevet car le métal d'hydrogénation est un métal du groupe VIb, et la teneur en nickel est inférieure à 15% poids.

Au vu des solutions décrites dans la littérature, la présente invention propose un procédé mettant en oeuvre un catalyseur présentant une composition spécifique, permettant de réaliser conjointement l'hydrogénation des composés polyinsaturés et plus particulièrement des dioléfines, ainsi que l'alourdissement des composés soufrés légers et plus particulièrement des mercaptans.

## DESCRIPTION SOMMAIRE DE L'INVENTION

La présente invention décrit un procédé d'hydrogénation sélective des composés polyinsaturés et plus particulièrement des dioléfines permettant de réaliser conjointement l'alourdissement des composés soufrés légers saturés et plus particulièrement des mercaptans, ledit procédé mettant en oeuvre un catalyseur contenant au moins un métal du groupe VIb et au moins un métal non noble du groupe VIII déposés sur un support poreux, et dans lequel :

- la teneur en poids d'oxyde de l'élément du groupe VIb est strictement supérieure à 12% poids,
- la teneur en poids d'oxyde de l'élément du groupe VIII est inférieure à 15% poids,
- le taux de sulfuration des métaux constituants ledit catalyseur est au moins égal à 60%,
- le rapport molaire entre le métal non noble du groupe VIII et le métal du groupe VIb est compris entre 0,2 et 0,5 mol/mol.

Le procédé consiste à faire passer sur le catalyseur un mélange constitué de l'essence à traiter et d'hydrogène.

L'hydrogène est introduit généralement en faible excès, jusqu'à 5 mole par mole, par rapport à la stoechiométrie, nécessaire pour hydrogéner les dioléfines (une mole d'hydrogène par mole de dioléfine)

Le mélange constitué de l'essence et de l'hydrogène est mis en contact avec le catalyseur sous une pression comprise entre 0,5 et 5 MPa, une température comprise entre 80°C et 220°C, avec une vitesse spatiale liquide (LHSV) comprise

entre $1h^{-1}$ et $10\ h^{-1}$, la vitesse spatiale liquide étant exprimée en litre de charge par litre de catalyseur et par heure (1/1.h).

DESCRIPTION DETAILLEE DE L'INVENTION

L'invention concerne un procédé de traitement d'essences comprenant tout type de familles chimiques et notamment des dioléfines, des mono-oléfines, et des composés soufrés sous forme de mercaptans et de sulfures légers. La présente invention trouve particulièrement son application dans la transformation des essences de conversion, et en particulier des essences en provenance du craquage catalytique, du craquage catalytique en lit fluide (FCC), d'un procédé de cokéfaction, d'un procédé de viscoréduction, ou d'un procédé de pyrolyse. Les charges pour lesquelles s'applique l'invention ont une température d'ébullition comprise entre 0°C et 280°C, et plus précisément entre 30°C et 250°C. Les charges peuvent également contenir des hydrocarbures à 3 ou 4 atomes de carbone.
Par exemple, les essences issues d'unités de craquage catalytique (FCC) contiennent, en moyenne, entre 0,5 % et 5 % poids de dioléfines, entre 20 % et 50% poids de mono-oléfines, entre 10 ppm et 0,5 % poids de soufre dont généralement moins de 300 ppm de mercaptans. Les mercaptans se concentrent généralement dans les fractions légères de l'essence et plus précisément dans la fraction dont la température d'ébullition est inférieure à 120°C.
Le traitement de l'essence décrit dans le présent procédé consiste principalement à :

- hydrogéner sélectivement les dioléfines en mono-oléfines
- transformer les composés soufrés légers saturés et principalement les mercaptans, en sulfures ou mercaptans plus lourds par réaction avec les mono-oléfines

Les réactions d'hydrogénation des dioléfines en mono-oléfines sont illustrées ci-dessous par la transformation du 1,3 pentadiène, composé instable, qui peut facilement polymériser en pent-2-ène par réaction d'addition d'hydrogène. Toutefois, on cherche à limiter les réactions secondaires d'hydrogénation des mono-oléfines qui dans l'exemple ci-dessous conduiraient à la formation de n-pentane.

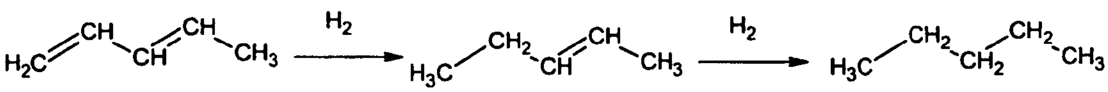


Les composés soufrés que l'on cherche à transformer sont principalement les mercaptans et les sulfures. La réaction principale de transformation des mercaptans consiste en une thioéthérification des mono-oléfines par les mercaptans. Cette réaction est illustrée ci-dessous par l'addition du propane-2-thiol sur le pent-2-ène pour former un propyl pentyl sulfure.

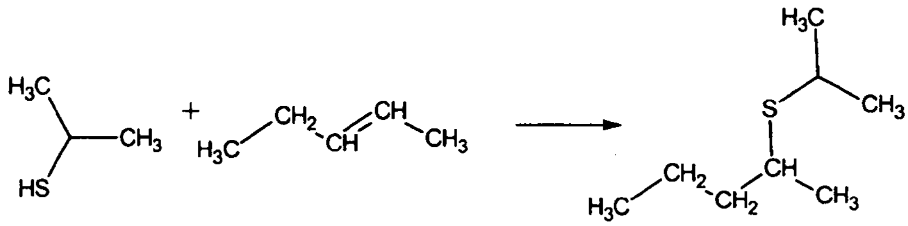

En présence d'hydrogène, la transformation des composés soufrés peut également passer par la formation intermédiaire d'$H_2S$ qui peut ensuite s'additionner sur les composés insaturés présents dans la charge. Cette voie est toutefois minoritaire dans les conditions de la réaction préférées.
Outre les mercaptans, les composés susceptibles d'être ainsi transformés et alourdis sont les sulfures et principalement le diméthyl sulfure, méthyl éthyl sulfure et diéthyl sulfure, le $CS_2$, le COS, le thiophane, le méthyl thiophane.
Dans certains cas, on peut également observer des réactions d'alourdissement des composés azotés légers, et principalement des nitriles, du pyrrole et de ses dérivés.
Le procédé décrit dans la présente invention consiste à mettre en contact la charge à traiter en mélange avec un flux d'hydrogène, avec un catalyseur contenant au moins un métal du groupe VIb (groupe 6 selon la nouvelle notation de la classification périodique des éléments : Handbook of Chemistry and Physics, 76ième édition, 1995-1996) et au moins un métal du groupe VIII, (groupes 8, 9 et 10) de ladite classification, déposés sur un support poreux.
En particulier, il a été trouvé que les performances des catalyseurs sont améliorées lorsque le catalyseur présente les caractéristiques suivantes :

La teneur en poids d'oxyde de l'élément du groupe VIb sous forme oxyde est strictement supérieure à 12% poids, et de manière préférée, strictement supérieure à 14%. Le métal du groupe VIb est de préférence choisi parmi le molybdène et le tungstène. De manière plus préférée, le métal du groupe VIb est le molybdène.

Le catalyseur contient également un métal non noble du groupe VIII choisi de préférence parmi le nickel, le cobalt et le fer. De manière plus préférée, le métal non noble du groupe VIII est constitué de nickel. La teneur en métal non noble du groupe VIII exprimée sous forme d'oxyde est inférieure à 15% poids et de préférence comprise entre 1% poids et 10% poids.

Le rapport molaire entre le métal non noble du groupe VIII et le métal du groupe VIb est compris entre 0,2 et 0,5 mol/mol et de manière préférée, entre 0,25 et 0,45 mol/mol..

De préférence, on utilise un catalyseur présentant un volume poreux total mesuré par porosimétrie au mercure supérieur à 0,4 $cm^3/g$, et de préférence supérieur à 0,7 $cm^3/g$ et inférieur à 1,4 $cm^3/g$. La porosimétrie au mercure est mesurée selon la norme ASTM D4284-92 avec un angle de mouillage de 140°, avec un appareil modèle Autopore III de la marque Microméritics.

La surface spécifique du catalyseur est de préférence inférieure à 250 $m^2/g$, et de manière plus préférée comprise entre 30 $m^2/g$ et 150 $m^2/g$.

De plus, le volume des pores du catalyseur, mesuré par porosimétrie au mercure, dont le diamètre est supérieur à 0,1 micron représentent de préférence au moins 25% du volume poreux total et de manière plus préférée, au moins 30% du volume poreux total. Il a notamment été observé par les inventeurs, que cette répartition poreuse permet de limiter la formation de gommes dans le catalyseur.

Le volume des pores du catalyseur dont le diamètre est compris entre 0,004 et 0,009 microns représentent de préférence 0,5 à 3 % du volume poreux total et de manière préférée, 1 à 2 % du volume poreux total.

De manière préférée, le catalyseur selon l'invention ne contient pas de métal alcalin, ni d'alcalino terreux.

De manière préférée, le catalyseur selon l'invention est dépourvu d'halogène et en particulier de fluor.

De manière préférée, le catalyseur sous forme oxyde selon l'invention, avant test catalytique, est dépourvu de carbone.

Le support du catalyseur est de préférence un oxyde métallique poreux choisi parmi l'alumine, la silice, le carbure de silicium, ou un mélange de ces oxydes. On utilise, de manière préférée, de l'alumine et de manière encore plus préférée, de l'alumine pure

De manière très préférée, on utilise de l'alumine gamma cubique ou de l'alumine delta et de manière encore plus préférée, on utilise de l'alumine delta.

De manière préférée, on utilise un support présentant un volume poreux total mesuré par porosimétrie au mercure compris entre 0,8 et 1,4 $cm^3/g$ et préférentiellement compris entre 0,9 et 1,3 $cm^3/g$.

De plus, le volume des pores du support, mesuré par porosimétrie au mercure, dont le diamètre est supérieur à 0,1 micron représentent de préférence au moins 20% du volume poreux total et de manière plus préférée au moins 25% du volume poreux total.

La surface spécifique du support est de préférence inférieure à 250 $m^2/g$, et de manière plus préférée comprise entre 30 $m^2/g$ et 150 $m^2/g$.

Un mode de réalisation préféré de l'invention correspond à la mise en oeuvre d'un catalyseur contenant une teneur en poids d'oxyde de Nickel sous forme NiO comprise entre 1 et 10%, une teneur en poids d'oxyde de molybdène sous forme $MoO_3$ supérieure à 12% et un rapport molaire Nickel/Molybdène compris entre 0,25 et 0,45, les métaux étant déposés sur un support alumine pur et le taux de sulfuration des métaux constituant le catalyseur étant supérieur à 80%.

Le catalyseur selon l'invention peut être préparé au moyen de toute technique connue de l'homme du métier, et notamment par imprégnation des éléments des groupes VIII et VIb sur le support sélectionné. Cette imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support. Le support ainsi rempli par la solution est de préférence séché. Le support préféré est l'alumine qui peut être preparée à partir de tout type de précurseurs et outils de mise en forme connus de l'homme de métier.

Après introduction des éléments des groupes VIII et VIb, et éventuellement une mise en forme du catalyseur, celui-ci subi un traitement d'activation. Ce traitement a généralement pour but de transformer les précurseurs moléculaires des éléments en phase oxyde. Il s'agit dans ce cas d'un traitement oxydant mais un simple séchage du catalyseur peut également être effectué. Dans le cas d'un traitement oxydant, également appelé calcination, celui-ci est généralement mis en oeuvre sous air ou sous oxygène dilué, et la température de traitement est généralement comprise entre 200°C et 550°C, de préférence entre 300°C et 500°C. Des sels de métaux des groupes VIb et VIII utilisables dans le procédé de préparation du catalyseur sont par exemple le nitrate de cobalt, le nitrate de nickel, l'heptamolybdate d'ammonium ou le métatungstate d'ammonium. Tout autre sel connu de l'homme du métier présentant une solubilité suffisante

et décomposable lors du traitement d'activation peut également être utilisé.
Après calcination, les métaux déposés sur le support se trouvent sous forme d'oxyde. Dans le cas du nickel et du molybdène, les métaux se trouvent principalement sous forme de $MoO_3$ et de NiO. Avant mise en contact avec la charge à traiter, les catalyseurs subissent une étape de sulfuration. La sulfuration est de préférence réalisée en milieu sulforéducteur, c'est à dire en présence d'$H_2S$ et d'hydrogène, afin de transformer les oxydes métalliques en sulfures tels que par exemple, le $MoS_2$ et le $Ni_3S_2$. La sulfuration est réalisée en injectant sur le catalyseur un flux contenant de l'$H_2S$ et de l'hydrogène, ou bien un composé soufré susceptible de se décomposer en $H_2S$ en présence du catalyseur et de l'hydrogène. Les polysulfures tel que le diméthyldisulfure sont des précurseurs d'$H_2S$ couramment utilisés pour sulfurer les catalyseurs. La température est ajustée afin que l'$H_2S$ réagisse avec les oxydes métalliques pour former des sulfures métalliques. Cette sulfuration peut être réalisée in situ ou ex situ (en dedans ou dehors du réacteur) du réacteur d'hydrodésulfuration à des températures comprises entre 200 et 600°C et plus préférentiellement entre 300 et 500°C.
Pour être actifs, les métaux doivent être substantiellement sulfurés. Un élément est considéré comme substantiellement sulfuré lorsque le rapport molaire entre le soufre (S) présent sur le catalyseur et le dit élément est au moins égal à 60% du rapport molaire théorique correspondant à la sulfuration totale de l'élément considéré:

$$(\text{S/élément})_{\text{catalyseur}} >= 0{,}6 \text{ x } (\text{S/élement})_{\text{théorique}}$$

avec:

$(\text{S/élément})_{\text{catalyseur}}$ rapport molaire entre le soufre (S) et l'élément présents sur le catalyseur
$(\text{S/élément})_{\text{théorique}}$ rapport molaire entre le soufre et l'élément correspondant à la sulfuration totale de l'élément en sulfure.

Ce rapport molaire théorique varie selon l'élément considéré:

- $(\text{S/Fe})_{\text{théorique}} = 1$
- $(\text{S/Co})_{\text{théorique}} = 8/9$
- $(\text{S/Ni})_{\text{théorique}} = 2/3$
- $(\text{S/Mo})_{\text{théorique}} =2/1$
- $(\text{S/W})_{\text{théorique}} =2/1$

Le catalyseur comprenant, plusieurs métaux, le rapport molaire entre le S présent sur le catalyseur et l'ensemble des éléments doit également être au moins égal à 60% du rapport molaire théorique correspondant à la sulfuration totale de chaque élément en sulfure, le calcul étant effectué au prorata des fractions molaires relatives de chaque élément.
Par exemple, pour un catalyseur comprenant du molybdène et du nickel avec une fraction molaire respective de 0,7 et 0,3, le rapport molaire minimal (S/ Mo + Ni) est donné par la relation:

$$(\text{S/Mo+Ni})_{\text{catalyseur}} = 0{,}6 \text{ x } \{(0{,}7 \text{ x } 2)+ (0{,}3 \text{ x } (2/3)\}$$

De façon très préférée, le taux de sulfuration des métaux sera supérieur à 80%.
La sulfuration est mise en oeuvre sur les métaux sous forme d'oxyde sans que soit réalisée une étape préalable de réduction des métaux. En effet, il est connu que la sulfuration de métaux réduits est plus difficile que la sulfuration de métaux sous forme d'oxydes.

Dans le procédé d'hydrogénation sélective selon l'invention, la charge à traiter est mélangée à de l'hydrogène avant d'être mise en contact avec le catalyseur. La quantité d'hydrogène injectée est telle que le rapport molaire entre l'hydrogène et les dioléfines à hydrogéner soit supérieur à 1 (stoechiométrie) et inférieure à 10, et de préférence compris entre 1 et 5 mol/mol. Un trop large excès d'hydrogène peut entraîner une forte hydrogénation des mono-oléfines et par voie de conséquence, une diminution de l'indice d'octane de l'essence. La totalité de la charge est généralement injectée à l'entrée du réacteur. Toutefois, il peut être avantageux, dans certains cas d'injecter une fraction ou la totalité de la charge entre deux lits catalytiques consécutifs placés dans le réacteur. Ce mode de réalisation permet notamment de continuer à opérer le réacteur si l'entrée du réacteur se trouve bouchée par dépôts de polymères, de particules, ou de gommes présentes dans la charge.

Le mélange constitué de l'essence et de l'hydrogène est mis en contact avec le catalyseur à une température comprise entre 80°C et 220°C, et de préférence entre 90°C et 200°C, avec une vitesse spatiale liquide (LHSV) comprise entre $1h^{-1}$ et $10\ h^{-1}$, l'unité de la vitesse spatiale liquide étant le litre de charge par litre de catalyseur et par heure (1/1.h).

La pression est ajustée afin que le mélange réactionnel soit majoritairement sous forme liquide dans le réacteur. La pression est comprise entre 0,5 MPa et 5 MPa et de préférence entre 1 et 4 MPa.

L'essence traitée dans les conditions énoncées ci-dessus, présente une teneur en dioléfines et en mercaptans réduite. Généralement, l'essence produite contient moins de 1 % poids de dioléfines, et de préférence moins de 0,5 % poids de dioléfines. La teneur en composés soufrés légers dont la température d'ébullition est inférieure à celle du thiophène (84°C) sont généralement convertis à plus de 50%. Il est donc possible de séparer la fraction légère de l'essence par distillation et d'envoyer directement cette fraction au pool essence sans traitement complémentaire. La fraction légère de l'essence a généralement un point final inférieur à 120°C, et de préférence inférieure à 100°C et de façon très préférée inférieure à 80°C.

Ce nouveau catalyseur est particulièrement adapté pour être mis en oeuvre dans le cadre du procédé décrit dans le demande de brevet EP 01077247 A1.

## Exemple 1

Préparation des catalyseurs A, B, C et D(non conforme) et E et F (conforme à l'invention)

Les catalyseurs A, B, C, D, E et F sont préparés selon la méthode dite de l'imprégnation à sec. Le protocole de synthèse consiste à réaliser une imprégnation à sec d'une solution d'heptamolybdate d'ammonium et de nitrate de nickel, le volume de la solution aqueuse contenant les précurseurs métalliques étant égal au volume de reprise à l'eau correspondant à la masse de support à imprégner (volume d'eau total pouvant pénétrer dans la porosité). Les concentrations des précurseurs dans la solution sont ajustées de manière à déposer sur le support les teneurs pondérales en oxydes métalliques souhaitées. Le solide est ensuite laissé à maturer à température ambiante durant 12 heures, puis séché à 120°C, durant 12 heures. Finalement, le solide est calciné à 500°C durant deux heures sous flux d'air (1l/g.h). Le support alumine utilisé est un support industriel fourni par la société Axens connu sous le nom commercial de SCM139XL. Les caractéristiques des catalyseurs ainsi préparés sont fournies dans le tableau 1 ci-dessous. Les catalyseurs préparés se distinguent par leur teneur en phase active.

**Tableau 1 :** caractéristiques des catalyseurs A, B, C, D, E, F sous forme oxyde.

| Catalyseur | A | B | C | D | E | F |
|---|---|---|---|---|---|---|
| % pds en $MoO_3$ | 5,3 | 8,0 | 10 | 11,1 | 12,3 | 14,0 |
| % pds en NiO | 1,1 | 1,7 | 2,1 | 2,3 | 2,5 | 2,8 |
| Rapport molaire Ni/Mo | 0,4 | 0,41 | 0,41 | 0,4 | 0,39 | 0,39 |
| S(BET) $m^2/g$ | 126 | 123 | 118 | 118 | 116 | 110 |
| V poreux total (VPT) Hg $cm^3/g$ | 1,12 | 1,06 | 1,03 | 1,02 | 1,00 | 0,94 |
| V poreux Hg $cm^3/g$ (pores >0,1 micron) | 0,35 | 0,33 | 0,33 | 0,33 | 0,32 | 0,29 |
| V poreux (pores > 0,1 micron) en % du VPT | 31% | 31% | 32% | 32% | 32% | 31% |
| V poreux Hg $cm^3/g$ (0,004 micron< pores < 0,009 micron) et en % du V poreux total | 0,02 1,8% | 0,01 0,9% | 0,01 1% | 0,01 1% | 0,01 1% | 0,01 1% |

Selon les critères de porosité, de surface spécifique, de teneur pondérale en $MoO_3$ et de rapport molaire Ni/Mo, les catalyseurs E et F sont donc conformes à l'invention ; au contraire les catalyseurs A, B, C et D présentent une teneur en molybdène plus faible et sont donc non conformes à l'invention.

Évaluation des catalyseurs

L'activité des catalyseurs A, B, C, D, E et F est évaluée par un test d'hydrogénation sélective d'un mélange de molécules modèles effectué dans un réacteur autoclave agité de 500 ml. Typiquement entre 2 et 6 g de catalyseur sont sulfurés à pression atmosphérique en banc de sulfuration sous mélange $H_2S/H_2$ constitué de 15% volumique d'$H_2S$ à 1l/g.h de catalyseur et à 400°C durant deux heures. Ce protocole permet d'obtenir des taux de sulfuration supérieurs à 80% pour l'ensemble des catalyseurs conformément à l'invention. Le catalyseur ainsi sulfuré est transféré dans le réacteur à l'abri de l'air puis mis au contact de 250 ml de charge modèle sous une pression totale de 1,5 MPa et une température de 160°C. La pression est maintenue constante durant le test par apport d'hydrogène. La charge utilisée pour le test d'activité présente la composition suivante : 1000 ppm poids de soufre sous forme méthyl 3-thiophène, 100

ppm poids de soufre sous forme de propane-2-thiol, 10% poids oléfine sous forme de d'hexène-1, dans du n-heptane. Le temps t=0 du test correspond à la mise en contact du catalyseur et de la charge. La durée du test est fixée à 45 minutes et l'analyse chromatographique en phase gaz de l'effluent liquide obtenu permet d'évaluer les activités des différents catalyseurs en hydrogénation de l'isoprène (formation des méthylbutènes), hydrogénation de l'hexène-1 (formation du n-hexane) et alourdissement des mercaptans légers (conversion du propane-2-thiol). L'activité du catalyseur pour chaque réaction est définie par rapport à la constante de vitesse obtenue pour chaque réaction normalisée par gramme de catalyseur. La constante de vitesse est calculée en considérant un ordre 1 pour la réaction :

$$A(X) = k(X) / m$$

avec : A(X) : activité du catalyseur pour la réaction X, en $min^{-1}$ / g de catalyseur
k constante de vitesse pour la réaction considérée, en $min^{-1}$ étant calculée selon la formule

$$k(X) = (1/45) * \ln (100 / (100 - Conv(X) ))$$

avec 45: durée du test en minutes

Conv(X): conversion du composé X ; X = isoprène ou propane-2-thiol ou héxène-1 m : masse de catalyseur (forme oxyde) engagée dans le test

X : réaction considérée :

X = isoprène : hydrogénation de l'isoprène
X= héxène 1: hydrogénation du héxène 1
X = propane-2-thiol : conversion du propane-2-thiol

La sélectivité du catalyseur vis à vis de l'hydrogénation de l'isoprène est égale au rapport des activités du catalyseur en hydrogénation de l'isoprène et de l'hexène 1 :A(isoprène)/A(héxène-1)
Les résultats obtenus sur les différents catalyseurs sont reportés dans le tableau 2 ci-dessous.

**Tableau 2 :** performances des catalyseurs en test molécule modèle.

| Catalyseur | A | B | C | D | E | F |
|---|---|---|---|---|---|---|
| A(isoprène) *$10^3$ | 2,5 | 3,2 | 3,7 | 4,3 | 4,8 | 5,0 |
| A(héxène 1)*$10^3$ | 0,016 | 0,018 | 0,021 | 0,025 | 0,028 | 0,030 |
| A(isoprène)/A(héxène1) | 157 | 177 | 176 | 172 | 173 | 166 |
| A(propane-2-thiol)*$10^3$ | 11,7 | Infini* | Infini* | Infini* | Infini* | Infini* |
| * conversion totale du propane-2-thiol | | | | | | |

On constate que l'ensemble des catalyseurs sont très sélectifs vis à vis de la réaction d'hydrogénation de la dioléfine. Ces catalyseurs permettent donc d'hydrogéner substantiellement l'isoprène sans hydrogéner significativement le héxène 1.
On constate également que dans les conditions du test, la conversion du mercaptan léger est totale pour l'ensemble des catalyseurs hormis pour le catalyseur A, moins chargé en phase active.
En effet, dans le cas des catalyseurs B, C, D, E et F, une activité infinie signifie une conversion totale du propane-2-thiol.
En revanche, seuls les catalyseurs D, E et F conformes à l'invention présentent une activité très élevée en hydrogénation de l'isoprène.
Il apparaît donc que les catalyseurs conformes à l'invention sont capables d'effectuer simultanément l'hydrogénation sélective de la dioléfine avec conversion simultanée du mercaptan léger.

**Exemple 2 :** Influence du taux de sulfuration

Le catalyseur E décrit précédemment est évalué dans le test molécule modèle décrit dans l'exemple 1 (charge

et conditions opératoires identiques) mais sans étape de sulfuration préalable. Le taux de sulfuration du solide est donc nul. Le tableau 3 reporte les résultats catalytiques obtenus sur ce catalyseur en fonction de son taux de sulfuration. On constate que la sulfuration préalable du catalyseur a un effet bénéfique important sur l'activité du catalyseur en hydrogénation de l'isoprène et en conversion du propane-2-thiol, ainsi que sur la sélectivité, et plus particulièrement dans le cas où le taux de sulfuration est supérieur à 80%.
Dans le cas des catalyseurs sulfurés, une activité infinie signifie une conversion totale du propane-2-thiol

**Tableau 3 :** performances du catalyseur E en fonction de son taux de sulfuration.

| | E non sulfuré | E sulfuré | | |
|---|---|---|---|---|
| Taux de sulfuration / % | 0 | 45 | 65 | 86 |
| A(isoprène) $*10^3$ | 0,2 | 2,5 | 3,6 | 4,8 |
| A(héxène 1)$*10^3$ | 0,011 | 0,015 | 0,020 | 0,028 |
| A(isoprène)/A(héxène 1) | 18 | 167 | 180 | 173 |
| A(propane-2-thiol)$*10^3$ | 3 | Infini* | Infini* | Infini* |
| * conversion totale du propane-2-thiol | | | | |

**Exemple 3 :** Influence du rapport molaire Ni/Mo.

Dans cet exemple les catalyseurs G et H sont préparés selon le protocole opératoire décrit dans l'exemple 1. Ces catalyseurs ne diffèrent substantiellement du catalyseur E que par le rapport molaire Ni/Mo (tableau 4). Ils ne sont pas conformes à l'invention.

**Tableau 4 :** caractéristiques des catalyseurs G et H (non conforme à l'invention) sous forme oxyde.

| Catalyseur | G | H |
|---|---|---|
| % pds en $MoO_3$ | 12,0 | 12,4 |
| % pds en NiO | 0,9 | 8,3 |
| Rapport Ni/Mo molaire | 0,14 | 1,28 |
| S(BET) $m^2/g$ | 117 | 112 |
| V poreux total Hg $cm^3/g$ (VPT) | 1,01 | 0,85 |
| V poreux Hg $cm^3/g$ (pores >0,1 micron) | 0,33 | 0,25 |
| V poreux (pores > 0,1 micron) en % du VPT | 33% | 29% |

Les catalyseurs G et H sont évalués dans le test molécule modèle décrit dans l'exemple 1, pour ces catalyseurs, le protocole de sulfuration adopté permet d'obtenir des taux de sulfuration supérieurs à 80%. Ces catalyseurs sont comparés au catalyseur E, qui présente un rapport molaire Ni/Mo de 0,39 compris dans la fourchette préférée et un taux de sulfuration similaire.

**Tableau 5 :** performances des catalyseurs E, G, et H en test molécule modèle.

| Catalyseur | E | G | H |
|---|---|---|---|
| Taux de sulfuration | 86% | 87% | 90% |
| A(isoprène) $*10^3$ | 4,8 | 1,6 | 4,6 |
| A(1-héxène)$*10^3$ | 0,028 | 0,015 | 0,032 |
| A(isoprène)/A(héxène 1) | 173 | 107 | 144 |
| A(propane-2-thiol)$*10^3$ | infinie | 10,5 | infinie |

On constate que le catalyseur G (rapport Ni/Mo de 0,14) présente un déficit d'activité en hydrogénation de l'isoprène et en conversion du propane-2-thiol comparativement au catalyseur E conforme. On observe également que

l'augmentation de la teneur en nickel (catalyseur H, rapport Ni/Mo de 1,28) ne conduit pas à une augmentation de l'activité en hydrogénation de l'isoprène par rapport au catalyseur E, et que de plus la sélectivité A(isoprène)/A(héxène-1) diminue de manière importante.

## Revendications

1. Procédé d'hydrogénation sélective de composés poly insaturés en composés mono insaturés permettant conjointement l'alourdissement des composés soufrés légers saturés par réaction avec les composés insaturés contenus dans des essences, ledit procédé mettant en oeuvre un catalyseur contenant au moins un métal du groupe VIb et au moins un métal non noble du groupe VIII déposés sur un support et dans lequel

   • la teneur en poids d'oxyde de l'élément du groupe VIb est strictement supérieure à 12% poids,
   • la teneur en poids d'oxyde de l'élément du groupe VIII est inférieure à 15% poids,
   • le taux de sulfuration des métaux constituants ledit catalyseur est au moins égal à 60%,
   • le rapport molaire entre le métal non noble du groupe VIII et le métal du groupe VIb est compris entre 0,2 et 0,5 mol/mol.

2. Procédé selon la revendication 1 dans lequel le catalyseur comprend un métal du groupe VIb choisi parmi le Molybdène et le Tungstène.

3. Procédé selon la revendication 2 dans lequel le métal du groupe VIb est le Molybdène.

4. Procédé selon la revendication 1 dans lequel le catalyseur comprend un métal non noble du groupe VIII choisi parmi le Nickel, le Cobalt et le Fer.

5. Procédé selon la revendication 4 dans lequel le métal non noble du groupe VIII est le Nickel.

6. Procédé selon l'une des revendications précédentes dans lequel le catalyseur comprend une teneur en poids d'oxyde de l'élément du groupe VIII comprise entre 1 et 10% poids.

7. Procédé selon la revendication 1 dans lequel le taux de sulfuration des métaux constituants ledit catalyseur est supérieur à 80%.

8. Procédé selon la revendication 1 dans lequel le rapport molaire entre le métal non noble du groupe VIII et le métal du groupe VIb est compris entre 0,25 et 0,45 mol/mol.

9. Procédé selon l'une des revendications précédentes dans lequel le catalyseur présente un volume poreux total supérieur à 0,4 $cm^3/g$.

10. Procédé selon la revendication 9 dans lequel le catalyseur présente un volume poreux total compris entre 0,7 $cm^3/g$ et 1,4 $cm^3/g$.

11. Procédé selon l'une des revendications précédentes dans lequel les pores du catalyseur dont le diamètre est supérieur à 0,1 micron représentent au moins 25% du volume poreux total et de préférence au moins 30% du volume poreux total.

12. Procédé selon l'une des revendications précédentes dans lequel la surface spécifique du catalyseur est inférieure à 250 $m^2/g$ et de préférence comprise entre 30 et 150 $m^2/g$.

13. Procédé selon la revendication 1 dans lequel le support du catalyseur est un oxyde métallique poreux choisi parmi l'alumine, la silice, le carbure de silicium ou un mélange de ces oxydes.

14. Procédé selon la revendication 13 dans lequel le support du catalyseur est constitué d'alumine pure.

15. Procédé selon l'une des revendications 13 ou 14 dans lequel le support est constitué d'alumine gamma cubique ou de l'alumine delta.

**16.** Procédé selon l'une des revendications 13 à 15 dans lequel le support du catalyseur présente un volume poreux compris entre 0,8 et 1,4 $cm^3/g$.

**17.** Procédé selon la revendication 16 dans lequel le support du catalyseur présente un volume poreux compris entre 0,9 et 1,3 $cm^3/g$.

**18.** Procédé selon l'une des revendications 13 à 17 dans lequel le volume des pores du support dont le diamètre est supérieur à 0,1 micron représente au moins 20% du volume poreux total.

**19.** Procédé selon la revendication 18 dans lequel le volume des pores du support dont le diamètre est supérieur à 0,1 micron représente au moins 25% du volume poreux total.

**20.** Procédé d'hydrogénation sélective selon l'une des revendications précédentes dans lequel la charge est mis en contact avec le catalyseur sous une température comprise entre 80°C et 220°C avec une vitesse spatiale liquide comprise entre $1h^{-1}$ et $10h^{-1}$ et une pression comprise entre 0,5 et 5 MPa.

**Patentansprüche**

**1.** Verfahren zur selektiven Hydrierung von mehrfach ungesättigten Verbindungen zu einfach ungesättigten Verbindungen, das es gleichzeitig ermöglicht, die leichten gesättigten Schwefelverbindungen durch Umsetzung mit den ungesättigten Verbindungen, die in Benzin enthalten sind, in schwerere zu überführen, wobei bei dem Verfahren ein Katalysator eingesetzt wird, der mindestens ein Metall der Gruppe Vlb und mindestens ein unedles Metall der Gruppe VIII enthält, die auf einem Träger abgeschieden sind, und wobei

- der Gewichtsanteil des Oxids des Elements der Gruppe Vlb streng größer als 12 Gew.-% ist,
- der Gewichtsanteil des Oxids des Elements der Gruppe VIII kleiner als 15 Gew.-% ist,
- der Sulfurierungsgrad von Metallen, aus denen der Katalysator besteht, mindestens gleich 60 % ist,
- das Molverhältnis zwischen dem unedlen Metall der Gruppe VIII und dem Metall der Gruppe Vlb im Bereich zwischen 0,2 und 0,5 mol/mol liegt.

**2.** Verfahren nach Anspruch 1, wobei der Katalysator ein Metall der Gruppe Vlb umfasst, das aus Molybdän und Wolfram ausgewählt ist.

**3.** Verfahren nach Anspruch 2, wobei es sich bei dem Metall der Gruppe Vlb um Molybdän handelt.

**4.** Verfahren nach Anspruch 1, wobei der Katalysator ein unedles Metall der Gruppe VIII umfasst, das aus Nickel, Kobalt und Eisen ausgewählt ist.

**5.** Verfahren nach Anspruch 4, wobei es sich bei dem unedlen Metall der Gruppe VIII um Nickel handelt.

**6.** Verfahren nach einem der vorhergehenden Ansprüche, wobei der Katalysator einen Gewichtsanteil an Oxid des Elements der Gruppe VIII im Bereich zwischen 1 und 10 Gew.-% umfasst.

**7.** Verfahren nach Anspruch 1, wobei der Sulfurierungsgrad der Metalle, aus denen der Katalysator besteht, größer als 80 % ist.

**8.** Verfahren nach Anspruch 1, wobei das Molverhältnis zwischen dem unedlen Metall der Gruppe VIII und dem Metall der Gruppe Vlb im Bereich zwischen 0,25 und 0,45 mol/mol liegt.

**9.** Verfahren nach einem der vorhergehenden Ansprüche, wobei der Katalysator ein Gesamtporenvolumen größer als 0,4 $cm^3/g$ aufweist.

**10.** Verfahren nach Anspruch 9, wobei der Katalysator ein Gesamtporenvolumen im Bereich zwischen 0,7 $cm^3/g$ und 1,4 $cm^3/g$ aufweist.

**11.** Verfahren nach einem der vorhergehenden Ansprüche, wobei die Poren des Katalysators, deren Durchmesser größer als 0,1 Mikron ist, mindestens 25 % des Gesamtporenvolumens und bevorzugt mindestens 30 % des Gesamtporenvolumens ausmachen.

**12.** Verfahren nach einem der vorhergehenden Ansprüche, wobei die spezifische Oberfläche des Katalysators kleiner als 250 $m^2/g$ ist und bevorzugt im Bereich zwischen 30 und 150 $m^2/g$ liegt.

**13.** Verfahren nach Anspruch 1, wobei der Träger des Katalysators ein poröses Metalloxid ist, ausgewählt aus Aluminiumoxid, Siliciumdioxid, Siliciumcarbid oder aus einer Mischung dieser Oxide.

**14.** Verfahren nach Anspruch 13, wobei der Träger des Katalysators aus reinem Aluminiumoxid besteht.

**15.** Verfahren nach einem der Ansprüche 13 oder 14, wobei der Träger aus kubischem gamma-Aluminiumoxid oder delta-Aluminiumoxid besteht.

**16.** Verfahren nach einem der Ansprüche 13 bis 15, wobei der Träger des Katalysators ein Porenvolumen im Bereich zwischen 0,8 und 1,4 $cm^3/g$ aufweist.

**17.** Verfahren nach Anspruch 16, wobei der Träger des Katalysators ein Porenvolumen im Bereich zwischen 0,9 und 1,3 $cm^3/g$ aufweist.

**18.** Verfahren nach einem der Ansprüche 13 bis 17, wobei das Volumen der Poren des Trägers, deren Durchmesser größer als 0,1 Mikron ist, mindestens 20 % des Gesamtporenvolumens ausmacht.

**19.** Verfahren nach Anspruch 18 , wobei das Volumen der Poren des Trägers, deren Durchmesser größer als 0,1 Mikron ist, mindestens 25 % des Gesamtporenvolumens ausmacht.

**20.** Verfahren zur selektiven Hydrierung nach einem der vorhergehenden Ansprüche, wobei die Charge bei einer Temperatur im Bereich zwischen 80°C und 220°C mit einer Flüssigkeits-Raumgeschwindigkeit im Bereich zwischen 1 $h^{-1}$ und 10 $h^{-1}$ und einem Druck im Bereich zwischen 0,5 und 5 MPa mit dem Katalysator in Kontakt gebracht wird.

## Claims

**1.** A process for selective hydrogenation of polyunsaturated compounds into monounsaturated compounds which can jointly transform saturated light sulphur-containing compounds into heavier compounds by reaction with the unsaturated compounds contained in gasolines, said process employing a catalyst containing at least one metal from group VIB and at least one non-noble metal from group VIII deposited on a support, in which:

- the amount, by weight of oxide, of the group VIB element is strictly greater than 12% by weight;
- the amount, by weight of oxide, of the group VIII element is less than 15% by weight;
- the degree of sulphurization of the constituent metals of said catalyst is at least 60%;
- the mole ratio between the non-noble group VIII metal and the group VIB metal is in the range 0.2 to 0.5 mol/mol.

**2.** A process according to claim 1, in which the catalyst comprises a metal from group VIB selected from molybdenum and tungsten.

**3.** A process according to claim 2, in which the group VIB metal is molybdenum.

**4.** A process according to claim 1, in which the catalyst comprises a non-noble metal from group VIII selected from nickel, cobalt and iron.

**5.** A process according to claim 4, in which the non-noble group VIII metal is nickel.

**6.** A process according to one of the preceding claims, in which the catalyst comprises an amount of the oxide of the group VIII element in the range 1% to 10% by weight.

**7.** A process according to claim 1, in which the degree of sulphurization of the constituent metals of said catalyst is more than 80%.

**8.** A process according to claim 1, in which the mole ratio between the non-noble group VIII metal and the group VIB metal is in the range 0.25 to 0.45 mol/mol.

**9.** A process according to one of the preceding claims, in which the catalyst has a total pore volume of more than 0.4 $cm^3/g$.

**10.** A process according to claim 9, in which the catalyst has a total pore volume in the range 0.7 $cm^3/g$ to 1.4 $cm^3/g$.

**11.** A process according to one of the preceding claims, in which the volume of pores of the catalyst with a diameter of more than 0.1 microns represents at least 25% of the total pore volume, preferably at least 30% of the total pore volume.

**12.** A process according to one of the preceding claims, in which the specific surface area of the catalyst is less than 250 $m^2/g$ and preferably in the range 30 to 150 $m^2/g$.

**13.** A process according to claim 1, in which the catalyst support is a porous metal oxide selected from alumina, silica, silicon carbide and a mixture of said oxides.

**14.** A process according to claim 13, in which the catalyst support is constituted by pure alumina.

**15.** A process according to one of claim 13 or 14, in which the support is constituted by cubic gamma alumina or delta alumina.

**16.** A process according to one of claims 13 to 15, in which the catalyst support has a pore volume in the range 0.8 to 1.4 $cm^3/g$.

**17.** A process according to claim 16, in which the catalyst support has a pore volume in the range 0.9 to 1.3 $cm^3/g$.

**18.** A process according to one of claims 13 to 17, in which the volume of pores of the support with a diameter of more than 0.1 micron represents at least 20% of the total pore volume.

**19.** A process according to claim 18, in which the volume of pores of the support with a diameter of more than 0.1 micron represents at least 25% of the total pore volume.

**20.** A selective hydrogenation process according to one of the preceding claims, in which the feed is brought into contact with the catalyst at a temperature in the range 80°C to 220°C with a liquid hourly space velocity in the range 1 h-1 to 10 h-1 and at a pressure in the range 0.5 to 5 MPa.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 01077247 A1
- EP 1447436 A
- EP 0685552 A1
- EP 0623387 A1
- US 6469223 B
- US 3472763 A
- US 5807477 A
- US 5851383 A

### Littérature non-brevet citée dans la description

- Handbook of Chemistry and Physics. 1995